Europäisches Patentamt

European Patent Office

Office européen des brevets

(19)

(11) Numéro de publication: **0 005 399**
**B1**

(12) **FASCICULE DE BREVET EUROPEEN**

(45) Date de publication du fascicule du brevet: **12.05.82**

(21) Numéro de dépôt: **79400275.8**

(22) Date de dépôt: **27.04.79**

(51) Int. Cl.³: **B 60 C 17/00,**
**B 60 C 13/00, B 60 C 7/12**

(54) **Pneumatique de sécurité.**

(30) Priorité: **10.05.78 FR 7813891**

(43) Date de publication de la demande:
**14.11.79 Bulletin 79/23**

(45) Mention de la délivrance du brevet:
**12.05.82 Bulletin 82/19**

(84) Etats contractants désignés:
**BE CH DE GB IT NL**

(56) Documents cités:
**FR - A 2 201 981**
**FR - A - 2 206 200**
**FR - A - 2 268 657**
**FR - A - 2 287 350**
**FR - A - 2 350 973**
**US - A - 1 358 308**
**US - A - 3 207 200**

(73) Titulaire: **PNEUMATIQUES, CAOUTCHOUC,**
**MANUFACTURE ET PLASTIQUES KLEBER-**
**COLOMBES Société anonyme dite:**
**Place de Valmy**
**F-92700 Colombes (FR)**

(72) Inventeur: **Deck, Alphonse**
**4 ter, rue des Vertugadins**
**F-92190 Meudon (FR)**
Inventeur: **Lefaucheur, Claude**
**173, rue de Charenton**
**F-75012 Paris (FR)**

(74) Mandataire: **Chevallier, René et al,**
**6 Avenue Kléber**
**F-75116 Paris (FR)**

Courier Press, Leamington Spa, England.

Pneumatique de sécurité

L'invention est relative aux pneumatiques de sécurité pour l'équipement des véhicules, du type comprenant des flancs auto-portants épais permettant auxdits véhicules de continuer à rouler normalement ou presque normalement sans pression d'air de gonflage (par exemple après une crevaison) et sans que ces pneus s'affaissent complètement sous la charge.

On a déja proposé dans le brevet US—A— 3.207.200 (G.X. Boussu) des pneumatiques ayant des flancs relativement épais mais l'objectif était d'amortir l'effet de rebond lorsque le pneu passe sur un obstacle. A cet effet les flancs du pneu et éventuellement de la chambre à air était en mélange caoutchouteux à forte hystérésis pour ne restituer qu'une faible partie de l'énergie ayant provoqué le fléchissement des flancs. Ce type de pneu n'est pas à proprement parler un pneu de sécurité susceptible de rouler normalement sans pression d'air de gonflage. On a proposé par ailleurs dans les brevets FR—A—2.206.200 et 2.201.281 des pneus de sécurité à flancs auto-portants comprenant des profilés de soutien en caoutchouc pour palier une éventuelle insuffisance de pression d'air. Selon le premier de ces brevets les profilés de soutien à section lenticulaire peuvent être subdivisés en deux parties dont l'une est disposée entre les plis ou couches de la carcasse. Ce brevet concernen les pneus de motocyclettes à carcasse croisée. Le second brevet concerne plus spécialement les pneus d'automobiles du type à carcasse croisée ou à carcasse radiale et à ceinture comprenant de façon similaire des profilés de renforcement des flancs s'étendant des bourrelets jusqu'au sommet, ce profilés étant situés soit sur la face interne du pneu soit incorporés entre deux plis de la carcasse et étant en mélange caoutchouteux dont la dureté est comprise entre 45 et 90 (JISK 6301.5). Selon ce brevet chaque profilé de renforcement peut être composé de plusieurs couches de matières différentes, sans que cependant soient précisées la disposition et les caractéristiques particulières de ces couches.

L'invention a pour objet des réalisations perfectionnées de ces pneus de sécurité à flancs auto-portants en vue d'obtenir, en plus d'un comportement satisfaisant en cas de crevaison, un confort acceptable en roulage à l'état normalement gonflé, une facilité de montage sur les jantes habituelles et un poids non exagéré.

L'invention concerne à cette fin un pneumatique de sécurité comprenant une bande de roulement renforcée par une ceinture inextensible des bourrelets espacés et des flancs reliant les bourrelets aux côtes de la bande de roulement en délimitant sous cette dernière une chambre centrale gonflable, chaque flanc au moins étant renforcé par une carcasse et comprenant sur le côté intérieur de la carcasse un profilé de soutien en élastomère à section lenticulaire constitué de plusieurs couches de matières différentes s'étendant depuis le voisinage des bourrelets jusque sous les bords de la ceinture, pneu caractérisé en ce que lesdits profilés de soutien sont partagés en épaisseur en deux parties de souplesse différente dont l'une située au voisinage de la face intérieure de la carcasse est en élastomère souple ayant une dureté Shore A non supérieure à 70 et un module d'élasticité non supérieur à 80 bars tandis que l'autre partie, située du côté de l'intérieur du pneu, est en élastomère moins souple ayant une dureté Shore A comprise entre 80 et 95 et un module d'élasticité compris entre 70 et 100 bars.

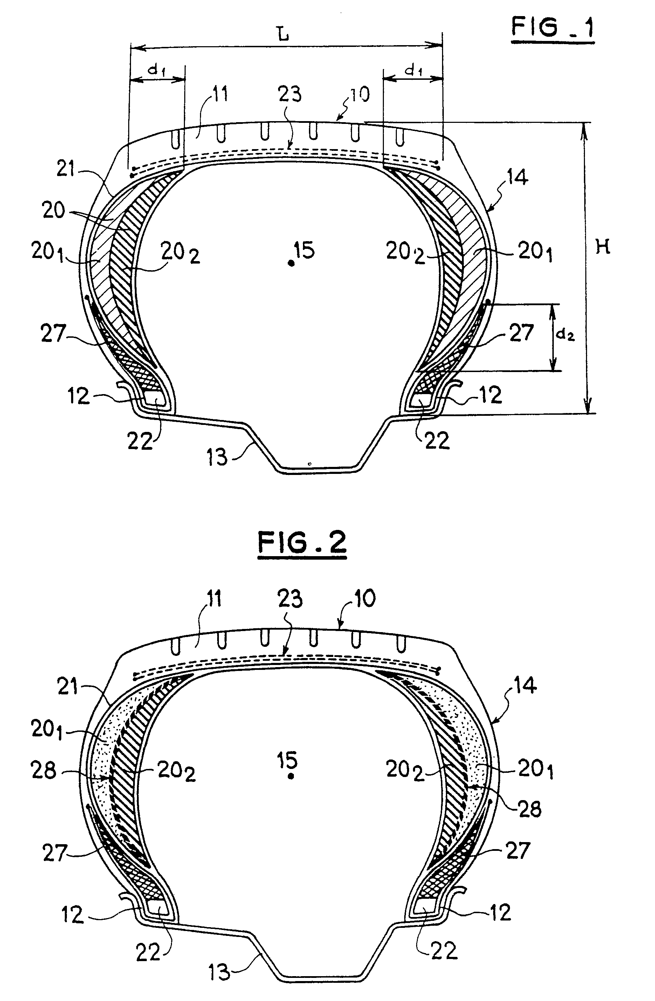

Des exemples de réalisation de l'invention sont décrits ci-aprés en référence aux dessins ci-joints dans lesquels les figures 1, 2 et 3 montrent en coupe transversale trois exemples de réalisation de l'invention.

Les pneus en question comprennent de façon générale, un sommet 10 avec une bande de roulement 11 renforcée par une ceinture inextensible 23 ayant à peu près la même largeur L que la surface de roulement, des bourrelets espacés 12 servant à maintenir le pneu en position montée sur la jante 13 de la roue et des flancs 14 bombés vers l'extérieur reliant les bourrelets 12 aux côtés latéraux du sommet 10 en définissant sous celui-ci une chambre centrale 15 pouvant être gonflée par une valve.

L'ensemble estrenforcé par une carcasse 21, de préférence de type radial, constituée d'une ou plusieurs nappes de câblés souples s'étendant sous la ceinture de sommet 23, dans les flancs 14 et dans les bourrelets 12 où ses extrémités sont accrochées sur les tringles 22 de la manière habituelle en remontant plus ou mois haut dans les flancs autour des profilés de remplissage 27 de chaque bourrelet.

Chaque flanc 14 comprend, situé sur le côté intérieur de la carcasse, un profilé de soutien à section lenticulaire 20, s'étendant depuis le voisinage du bourrelet correspondant 12 jusque sous les bords de la ceinture 23 en s'amincissant à ses deux extrémités. La forme et la disposition de ces profilés sont telles que, à leur pertie supérieure, ils s'étendent sous les bords de la ceinture 23 suivant une distance transversale d1 qui est de préférence non inférieure à 15% de la largeur transversale L de cette ceinture. Elles sont telles aussi que, à leur partie inférieure les profilés s'étendent verticalement contre les profilés 27 de remplissage et de raidissement des bourrelets suivant une hauteur d2 comprise entre 15 et 40% de la hauteur H de la section du pneu.

Chaque profilé de soutien 20 est constitué de deux parties assemblées de souplesse différente. La partie 20.1 située au contact de la carcasse est plus souple; elle est réalisée en un élastomère ayant une dureté Shore A non supérieure à 70 et un module d'élasticité non supérieur à 80 bars tandis que l'autre, 20.2, situé du côté de l'intérieur du pneu est en élastomère ayant une dureté Shore A comprise entre 80 et 95 et un module d'élasticité compris entre 70 et 100 bars (modules d'élasticité à 100% d'allongement). De préférence, la partie 20.1 du profilé adjacente à la carcasse 21 est en élastomère à structure cellulaire ayant une densité de l'ordre de 0,3 à 0,9, une dureté de l'ordre de 35 Shore A et un module d'élasticité de l'ordre de 20 bars (module à l'origine). L'autre partie 20.2 du profilé de soutien est en élastomère à structure compacte ayant la dureté et le module de l'ordre indiqué et formulé pour avoir en service un échauffement par hystérésis aussi faible que possible.

Dans l'exemple illustré sur la figure 1, les deux parties assemblées des profilés de soutien 20 présentent la même hauteur dans le sens radial, ainsi que des épaisseurs à peu près égales à chaque niveau de leur section droite. Les rapports de ces épaisseurs peuvent varier en fonction de la souplesse des élastomères utilisés pour ces deux parties et en fonction de la capacité de soutien désirée pour ces profilés, par exemple entre les rapports 2/1 et 1/2. De préférence ces épaisseurs sont choisies de telle façon que la ligne neutre du moment d'inertie flexionnel de l'ensemble du profilé 20 se situe dans la partie interne la plus souple 20.1 ou près de l'interface de deux parties. En service normal, les profilés de soutien 20 transmettent aux flancs de la carcasse 21 les efforts résultant de la pression de gonflage de sorte que la carcasse est maintenue sous tension. En cas de suppression de la pression dans la chambre centrale 15, les flancs 14 fléchissent davantage en soumettant les profilés 20 à une flexion vers l'extérieur ayant encore pour effet de maintenir la carcasse sous tension, ce qui lui permet de résister à une déchéance rapide par fatigue. Dans ce mouvement de flexion des profilés, leur partie compacte 20.2 travaille principalement en flexion pour exercer l'effet de soutien du sommet 10 du pneu et limiter le fléchissement des flancs 14, tandis que la partie souple 20.1 des profilés est comprimée entre la partie 20.2 et la carcasse elle-même 21.

La constitution des profilés de soutien 20 en deux parties assemblées 20.1—20.2 permet d'optimiser les propriétés de ces deux parties selon leur mode d'action propre. La partie 20.1 adjacente à la carcasse peut ainsi être faite en un mélange plus souple, favorable à un roulement confortable et à la facilité de montage du pneu sur la jante, tandis que la partie intérieure 20.2 peut être faite en un mélange moins souple pour avoir la propriété de portance désirée. La constitution des parties 20.1 des profilés au matériau cellulaire permet aussi d'alléger le pneu.

Dans l'exemple de réalisation de la figure 2, le pneu comprend en outre des moyens propres à favoriser l'évacuation de la chaleur engendrée dans la partie épaisse des profilés de soutien 20 notamment lorsque le pneu fonctionne dans des conditions plus sévères que la normale c'est à dire sans pression dans la chambre centrale ou en surcharge provoquant un plus grand fléchissement des flancs 14. Ces moyens consistent en une nappe ou couche conductrice de la chaleur 28 noyée au coeur des profilés 20 et s'étendant au moins jusqu'au voisinage des bourrelets 12. De préférence, elle s'étend sur toute la hauteur des profilés 20, depuis la partie supérieure des flancs adjacente à la ceinture de sommet 23 jusqu'au voisinage des bourrelets. Cette nappe conductrice est avantageusement disposée entre les deux parties de souplesse différente du profilé 20 de façon à se situer approximativement suivant le plan de la fibre neutre de flexion et de façon à n'être pas soumise à des contraintes substantielles de compression ou d'extension dans le sens radial. Cette nappe 28 peut être constituée par exemple par des câblés métalliques souples parallèles s'étendant suivant les plans radiaux du pneu.

En complément ou en remplacement de ces nappes conductrices et dans le même but de favoriser l'évacuation de la chaleur engendrée dans la partie épaisse des profilés de soutien 20, on peut utiliser avantageusement pour les pneus une carcasse 21 faite de câblés métalliques souples et bons conducteurs de la chaleur vers les zones du pneu relativement moins sujettes à échauffement en service.

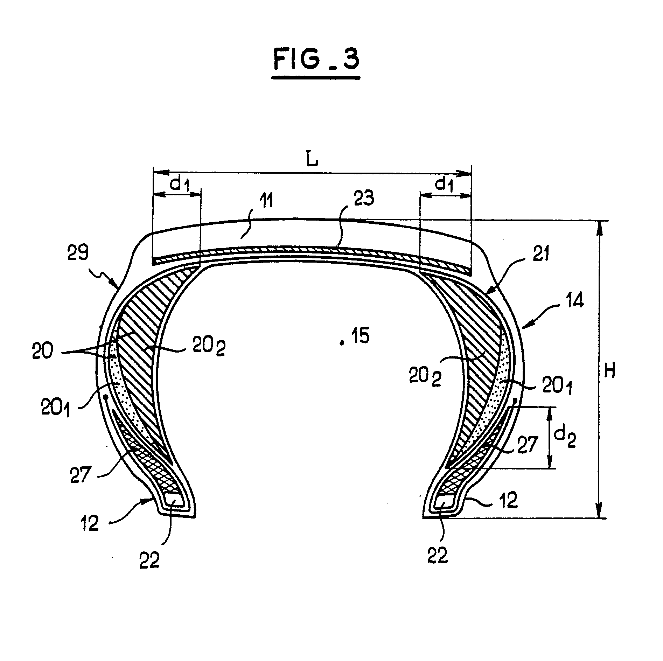

Dans l'exemple de réalisation illustré sur la figure 3, la partie souple 20.1 des profilés 20 s'étend au contact de la face interne de la carcasse 21 depuis le voisinage du bourrelet 12 jusqu'à environ le niveau de l'épaulement 29 du pneu, c'est à dire un peu au-dessus de la moitié de la hauteur des flancs et cette partie 20.1 a son épaisseur maximum située un peu en-dessous de la moitié du flanc. La partie moins souple 20.2 située vers l'intérieur du pneu recouvre la partie 20.1 depuis le voisinage du bourrelet 12 et elle s'étend au-delà de cette partie 20.1 jusque sous les parties latérales de la ceinture 23 suivant la distance transversale d.1. Au delà de la partie 20.1, la partie 20.2 du profilé est en contact avec la face intérieure de la carcasse 21 à partir de l'épaulement 29 où cette partie 20.2 présente son épaisseur maximum. Dans cette forme de réalisation, la partie souple 20.1 des profilés de soutien présente une section réduite, inférieure à la moitié de la section de la partie moins souple 20.2 et comprise par exemple entre la moitié et le quart de la section de la partie 20.2. Cela augmente la capacité de soutien de la charge des profilés 20 et réduit l'affaissement du pneu lorsqu'il est utilisé sans pression d'air dans la chambre 15. En outre, avec cette forme des profilés 20, le fléchissement des flancs sous la charge tend davantage à écarter les bourrelets 12 dans le sens axial et à les appliquer plus fortement contre les rebords de la jante, ce qui réduit les risques de déjantage en utilisation sans pression d'air.

A titre indicatif, lors d'essais effectués avec des pneus selon la figure 1, l'affaissement du pneu sous charge normale est de 18% de la hauteur H de la section lorsque les pneus sont gonflés à 1,6 bar et de 31% lorsque les pneus sont utilisés sans pression dans la chambre 15. Avec des pneus selon la figure 3, l'affaissement est de 16% de la hauteur H lorsqu'ils sont gonflés à 1,6 bar et de 22% seulement lorsqu'il n'y a aucune pression dans la chambre. A l'état normalement gonflé, les deux types de pneus comparés ont donc des comportements très comparables mais à l'état dégonflé, les pneus selon la figure 3 s'affaissent moins, ce qui réduit la fatigue des flancs et améliore le comportement routier.

## Revendications

1. Pneumatique de sécurité comprenant une bande de roulement (11) renforcée par une ceinture inextensible (23) des bourrelets espacés (12) et des flancs (14) reliant les bourrelets aux côtés de la bande de roulement en délimitant sous cette dernière une chambre centrale gonflable (15), chaque flanc au moins étant renforcé par une carcasse (21) et comprenant, sur le côté intérieur de la carcasse un profilé de soutien en élastomère (20) à section lenticulaire constitué de plusieurs couches de matières différentes s'étendant depuis le voisinage des bourrelets (12) jusque sous les bords de la ceinture pneu caractérisé en ce que lesdits profilés de soutien (20) sont partagés en épaisseur en deux parties de souplesse différente dont l'une (20.1) située au voisinage de la face intérieure de la carcasse (21) est en élastomère souple ayant une dureté Shore A non supérieure à 70 et un module d'élasticité non supérieur à 80 bars tandis que l'autre partie (20.2), située du côté de l'intérieur du pneu, est en élastomère moins souple ayant une dureté Shore A comprise entre 80 et 95 et un module d'élasticité compris entre 70 et 100 bars.

2. Pneumatique selon 1, dans lequel la partie (20.1) du profilé de soutien située au voisinage de la carcasse (21) est en élastomère à structure cellulaire présentant une densité comprise entre 0,3 et 0,9 tandis que la partie intérieure (20.2) du profilé est en élastomère à structure compacte.

3. Pneumatique selon 1 ou 2, dans lequel le profilé de soutien (20) contient une nappe conductrice de la chaleur (28) s'étendant depuis le coeur de ce profilé jusqu'au voisinage des bourrelets (12).

4. Pneumatique selon 3, dans lequel la nappe conductrice (28) s'étend depuis le sommet du pneu jusqu'au voisinage des bourrelets.

5. Pneumatique selon 3 ou 4, dans lequel la nappe conductrice (28) est constituée de câblés métalliques.

6. Pneumatique selon l'une quelconque des revendications 1 à 5, dans lequel la nappe conductrice (28) est placée entre les deux parties de souplesse différente de chaque profilé de soutien.

7. Pneumatique selon l'une quelconque des revendications 1 à 6, dans lequel la carcasse (21) est constituée de câblés métalliques.

8. Pneumatique selon l'une des revendications précédentes et dans lequel la partie intérieure souple (20.1) du profilé de soutien présente une section réduite, inférieure à la moitié de la section de la partie moins souple (20.2) du profilé.

9. Pneumatique selon 8, dans lequel la partie souple (20.1) du profilé de soutien s'étend depuis le voisinage du bourrelet jusqu'à environ l'épaulement du pneumatique tandis que la partie moins souple (20.2) du profilé de soutien s'étend au delà de cette dernière jusque sous les parties latérales de la ceinture de sommet, en contact avec ld côté intérieur de la carcasse à partir de l'épaulement du pneu, cette partie du profilé présentant une épaisseur maximum à l'endroit de l'épaulement du pneu.

## Claims

1. Safety tyre comprising a tread (11) reinforced by an inextensible belt (23) of the spaced apart beads (12) and sides (14) connecting the beads at the sides of the tread whilst delimiting below this latter a central inflatable chamber (15), each side at least being reinforced by a casing (21) and at the inward side of the casing comprising an elastomeric supporting section (20) having a lenticular cross-section and formed by several layers of different materials extending from close to the beads (12) as far as below the edges of the belt, characterised in that the said supporting sections (20) have their thickness divided into two parts of different flexibility, of which the one (20.1) situated close to the inward surface of the casing (21) is a flexible elastomer having a lower Shore A hardness than 70 and a modulus of elasticity not exceeding 80 bars whereas the other part (20.2) situated at the internal side of the tyre is of less flexible elastomer having a Shore A hardness comprised between 80 and 95 and a modulus of elasticity comprised between 70 and 100 bars.

2. Tyre according to 1, in which the part (20.1) of the supporting section situated close to the casing (21) consists of elastomer having a cellular structure of a density comprised between 0.3 and 0.9 whereas the internal part (20.2) of the section is of elastomer having a compact structure.

3. Tyre according to 1 or 2, in which the supporting section (20) contains a heat-conductive layer extending from the centre of this section up to close to the beads (12).

4. Tyre according to 3, in which the conductive layer (28) extends from the summit of the tyre up to close to the beads.

5. Tyre according to 3 or 4, in which the conductive layer (28) comprises metal cords.

6. Tyre according to any one of the claims 1 to 5, in which the conductive layer (28) is situated between the two parts of different flexibility of each supporting section.

7. Tyre according to any one of the claims 1 to 6, in which the casing (21) comprises metal cords.

8. Tyre according to one of the preceding claims and in which the flexible internal part (20.1) of the supporting section has a reduced cross-section smaller than half the cross-section of the less flexible part (20.2) of the section.

9. Tyre according to 8, in which the flexible part (20.1) of the supporting section extends from close to the bead up to about the shoulder of the tyre, whereas the less flexible part (20.2) of the supporting section extends beyond this latter as far as below the lateral portions of the summit belt, in contact, with the inner side of the casing from the tyre shoulder, this part of the section having a maximum thickness in the area of the shoulder of the tyre.

## Patentansprüche

1. Sicherheitsreifen mit einem durch einen undehnbaren Gürtel (23) verstärken Laufstreifen (11) unter Abstand voneinander angeordneten Reifenwülste (12) und Reifenflanken (14), die die Reifenwülste mit den Seitenrändern des Laufstreifens verbinden und dabei unterhalb des Laufstreifens eine aufblasbare mittige Kammer (15) begrenzen, wobei jede Flanke mindestens durch eine Karkasse (21) verstärkt is und auf der Innenseite der Karkasse ein Elastomerstützprofil (20) aufweist, das linsenförmigen Querschnitt hat, aus mehreren Schichten unterschiedlichen Materials besteht und sich ausgehend von den Reifenwülsten (12) bis unter die Ränder des Gürtels erstreckt, dadurch gekennzeichnet, daß die Stützprofile (20) der Dicke nach in zwei Teile unterschiedlicher Biegsamkeit unterteilt sind, von denen der eine, der Innenfläche der Karkasse (21) benachbarte angeordnete Teil ($20_1$) aus einem biegsamen Elastomer besteht, das eine Shore-A-Härte von höchstens 70 und einen Elastizitätsmodul von höchstens 80 Bar hat, während der andere auf der Innenseite des Reifens befindliche Teil ($20_2$) aus einem Elastomer geringerer Biegsamkeit mit einer Shore-A-Härte von 80 bis 95 und einem Elastizitätsmodul von 70 bis 100 Bar besteht.

2. Reifen nach Anspruch 1, dadurch gekennzeichnet, daß der der Karkasse (21) benachbarte Teil ($20_1$) des Stützprofils aus einem Elastomer mit einer Zellenstruktur einer Dichte von 0,3 bis 0,9 besteht, während der innere Teil ($20_2$) des Stützprofils aus einem Elastomer mit kompakter Struktur gefertigt ist.

3. Reifen nach Anspruch 1 oder 2, dadurch gekennzeichnet, daß das Stützprofil (20) eine Wärmeleiterschicht (28) enthält, die sich vom Inneren des Stützprofils bis in die Nähe der Reifenwülste (12) ersteckt.

4. Reifen nach Anspruch 3, dadurch gekennzeichnet, daß sich die Wärmeleiterschicht (28) vom Reifenscheitel bis in die Nähe der Reifenwülste erstreckt.

5. Reifen nach Anspruch 3 oder 4, dadurch gekennzeichnet, daß die Wärmeleiterschicht (28) aus Metallkabeln besteht.

6. Reifen nach einem der Ansprüche 1 bis 5, dadurch gekennzeichnet, daß die Wärmeleiterschicht (28) zwischen die beiden Teile unterschiedlicher Biegsamkeit jedes Stützprofils eingebracht ist.

7. Reifen nach einem der Ansprüche 1 bis 6, dadurch gekennzeichnet, daß die Karkasse (21) aus Metallkabeln besteht.

8. Reifen nach einem der bisherigen Ansprüche, dadurch gekennzeichnet, daß der innere biegsame Teil ($20_1$) des Stützprofils einen verminderten Querschnitt hat, der kleiner ist als der halbe Querschnitt des weniger biegsamen Teils ($20_2$) des Stützprofils.

9. Reifen nach Anspruch 8, dadurch gekennzeichnet, daß sich der biegsame Teil ($20_1$) des Stützprofils ausgehend von der Nachbarschaft des Reifenwulstes bis ungefähr zur Reifenschulter erstreckt, während de weniger biegsame Teil ($20_2$) des Stützprofils sich darüber hinaus bis unterhalb der seitlichen Abschnitte des Gürtels im Reifenscheitel erstreckt und dabei von der Reifenschulter ab in Berührung mit der Innenfläche der Karkasse steht, wobei dieser Abschnitt des Stützprofils im Bereich der Reifenschulter eine maximale Dicke aufweist.

FIG . 1

FIG . 2

1

# FIG _ 3